# EUROPEAN PATENT APPLICATION

(11) **EP 1 357 543 A2**
(43) Date of publication of application: **29.10.2003**
(21) Application number: 03251254.3
(22) Date of filing: 22.02.2003
(51) Int. Cl.: G10L 21/02, G10K 11/34

(54) **Beamformer delay compensation during handsfree speech recognition**

(30) Priority: 26.04.2002 GB 0209579
(71) Applicant: Mitel Knowledge Corporation, Ottawa, Ontario K2K 2W7 (CA)
(72) Inventor: Amiri, Maziar, London NW3 5DL (GB); Thompson, Graham, Kanata, Ontario K2K 1X7 (CA)
(74) Representative: Naismith, Robert Stewart, Dr.

(57) **Abstract**

A beamformer for outputting an enhanced signal to a speech recognition system, comprising a microphone array for receiving audio signals from a plurality of microphones, a steering module connected to the microphone array for calculating audio parameters related to the location of a talker, the steering module being subject to an inherent initial delay in calculating the parameters, a buffer module connected to the microphone array for delaying the audio signals by at least the inherent initial delay; and a beamforming part connected to the buffer module and the steering module for directing the microphone array toward the talker in response to receiving the audio parameters from the steering part, such that an enhanced signal is output for application to a speech recognition system.

## Description

### FIELD OF THE INVENTION

The present invention relates generally to handsfree telephone systems and in particular to a method and apparatus for improving handsfree speech recognition by compensating for beamformer steering delay.

### BACKGROUND OF THE INVENTION

Localization of sound sources is required in many applications, such as hands free telephony or hands free dictation applications on a personal computer, where the source position is used to steer a high quality microphone beam toward a talker. It is known in the art to use electronically steerable arrays of sensors, or an antenna, in combination with localization estimator algorithms to pinpoint the location of a talker in a room. In this regard, high quality and complex beamformers have been used to measure sound levels at different positions. As discussed in greater detail below, there are two types of beamformer: fixed and adaptive.

Estimator algorithms are used to locate the dominant sound source using information received from sound sources via the beamformer(s). This talker localization functionality can be implemented either as a separate module feeding the beamformer with the talker position or as part of an adaptive beamforming algorithm. The former implementation is set forth in commonly assigned UK patent application no. 0016142.2, entitled Acoustic Talker Localization by Maziar Amiri, Dieter Schulz, Michael Tetelbaum, while the latter implementation is set forth in US Patent No. 4,956,867 entitled Adaptive Beamforming for Noise Reduction.

The performance of speech recognition algorithms is significantly degraded during handsfree telephony. This is due to noise and reverberation, which are captured to a much lesser degree when a handset or headset is used. As discussed above, beamforming improves the quality of handsfree telephony by attenuating reverberation and noise. Consequently, beamforming may also be used to enhance the quality of speech recognition during handsfree operation, but only after the beamsteering parameters have been adjusted to a quasi-stationary environment (i.e. the beam is focused on the active talker).

Fixed beamformers require an initialization time period (approximately 50-250 ms) within which to locate a source of speech. During this time period, the beamformer is said to be in an "initial state" with no useful beam output being available., During this initial state, a default one of the microphones can be selected to provide signal output, without the noise reduction benefit of beamforming, until the source has been localized. The first 50 to 250ms of an utterance contain very important information from a speech recognition perspective, for example differentiating "Be" from "Pee" or "Dee". It is therefore evident that it is highly desirable to have this initial period benefit from noise reduction in addition to the entire remainder of the talker's utterance.

Adaptive beamformers do not require a localization algorithm, but do also require an initial time period to adjust the adaptive parameters to the given environment. In both fixed and adaptive beamformers, the beam output is non-optimal so long as the parameters are not adjusted to a quasi-stable state for the acoustic environment.

For straightforward hands-free telephony (i.e. use for human to human communication), the transition of the beamformer from the initial state (during which the non-optimal default microphone is selected) to the quasi-stable state imposes no apparent difficulty in conducting conversations. This is due to the redundancy in normal conversation plus the fact that the human ear is arguably significantly better than any current machine at the task of speech recognition. By way of contrast, the initial sub-optimal microphone selection usually results in the first spoken word not being represented properly by a speech recognition algorithm. Therefore, the error rate of recognition rises for the first word. This error also occurs each time the talker moves or the acoustical environment changes in some way.

Accordingly, there is a need to compensate for the transition time from beamformer initial state to quasi-stable state for the purposes of handsfree speech recognition, but not for straightforward handsfree telephony or dictation.

### SUMMARY OF THE INVENTION

According to the present invention, the signal from each microphone channel of the beamformer is stored in a FIFO buffer. Signal playback takes place only after the parameters have been adjusted and an enhanced acoustic signal is guaranteed. The introduced delay is constant, and is chosen to be the maximum convergence or "adaptation" time needed for parameter adjustment. In other words, the length of the FIFO buffer depends on the "adaptation" time. Since the parameters are calculated previous to signal output being provided to the speech recognition algorithm, the output provided is always optimal. Also, the delay imposed by the FIFOs has no important impact on the speech recognition process, the result of which is effectively further delayed by a time equal to the delay added by the FIFO.

According to the preferred embodiment, the beamformer is split into two parts. The first part is the steering part, which calculates the parameters of the beamformer using the incoming signals from the microphone array. The second part does the actual beamforming using the delayed microphone signals. The FIFO buffer delays the speech signals applied to the second, beamforming, part, whereas the signals are applied directly to the first, steering, part.

### BRIEF DESCRIPTION OF THE DRAWINGS

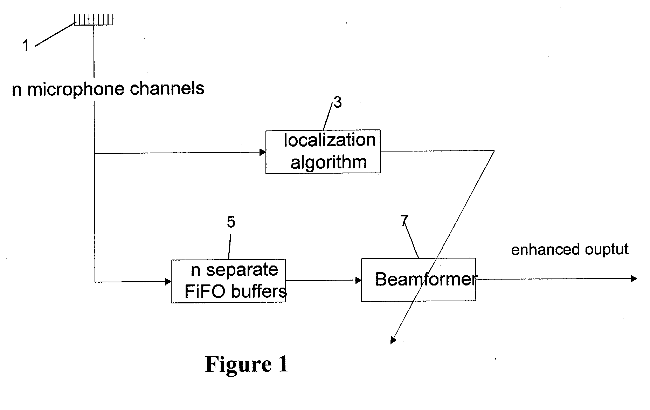

A preferred embodiment of the present invention will now be described more fully with reference to Figure 1, which is a block diagram of a delay compensation system according to the present invention, for a fixed beamformer.

### DETAILED DESCRIPTION OF THE PREFERRED EMBODIMENT

Figure 1 is a block diagram of a delay compensator for a steered and fixed beamformer, according to an embodiment of the invention. A plurality (n) of microphone signals from array 1 are applied to the localization algorithm 3, which immediately begins to calculate the position of a person talking. The microphone signals are also fed into FIFO buffers 5, which introduce an equal delay to all channels before the signals are transmitted to the beamformer 7. The FIFO buffers 5 are preferably implemented in DSP software using a circular buffer in RAM. This well-known method requires that two pointers are provided: one points to the next input sample and the other points to the next output sample. DSP code manages the pointers to ensure that the pointers do not cross, thereby avoiding an overflow or underflow condition, as is well understood in the art. As discussed above, the delay conforms to the maximum amount of time needed by the localization algorithm 3 to find the position of the talker. Thus, the localized signal output from beamformer 7 is enhanced for application to a speech detection algorithm (not shown). As discussed above, this configuration should only be used when speech recognition is being applied to the handsfree telephone output (i.e. the output of beamformer 7). It is desirable that there should be no unnecessary added delay (i.e. the microphone signals should be routed directly to the beamformer 7) during normal (human) handsfree conversation. As discussed below, the FIFO delay can be reduced to zero during periods of silence.

Once localization (or adaptation) has stabilized, the FIFO delay is preferably reduced to zero. This is accomplished via a control signal derived from the Call Controller of the telephone system (i.e. the delay is switched out as soon as the Call State exits the dialing state and enters talking state).

Alternatively, this can be done during periods of silence as determined by a Voice Activity Detector (VAD), which is an inherent component of many localization schemes including that of the preferred embodiment, and is described in co-pending U.K. patent application No. 0120322.3. The speech samples in the circular RAM FIFO buffers 5 can be analyzed using a DSP algorithm to detect periods of "silence". As the sequence of samples approaches the "output" of the FIFO, the output pointer is simply moved to the beginning of the period of silence, thereby simultaneously removing the silence period and also reducing the delay. The DSP algorithm also checks for underflow conditions within the FIFO buffers 5 (i.e. the delay has effectively been reduced to zero). Further DSP code may be used to reinstate the delay based either on Call State (such as a call exiting the Talking State, Idle, Hold or Transfer etc., or entering Signaling) or on the basis of duration of a silence in excess of a predetermined limit (e.g. > 10 sec). Such silence suppression algorithms are well known in the art and are an inherent part of many VoIP and Voice Compression protocols, (e.g. G.729, where silence suppression is used as a method of reducing bandwidth).

In practice, the silence period that arises inherently during transitions between call states as the caller waits for the called party to answer is usually sufficient to eliminate the FIFO delay. Consequently, the FIFO delay is used only during the transition time in which the beamformer is in the initial state, and therefore does not interfere with normal handsfree conversation.

Also, whereas the preferred embodiment is set forth above in the context of handsfree microphone arrays, it is contemplated that the present invention can be applied to any kind of speech recognition application using remote microphones, such as PC dictation (e.g. Dragon Naturally Speaking™, IBM Via Voice™) which use awkward noise canceling headsets. Also a number of vendors have introduced very simple microphone arrays which use non-steerable beamformers similar to low cost, very high performance directional microphones, (i.e. points to a fixed direction). The principles of the present invention may be utilized to address anticipated difficulties of PC users of such directional microphones.

All such embodiments, modifications and applications are believed to be within the sphere and scope of the invention as defined by the claims appended hereto.

## Claims

1. For use with a beamformer having a steering part for calculating, after an inherent initial delay, audio parameters related to the location of a talker in a handsfree telephony environment, and a beamforming part for directing a microphone array toward said talker in response to receiving said audio parameters from said steering part, such that an enhanced signal is output for application to a speech recognition system, the improvement comprising delaying application of audio signals received from said microphone array to said beamforming part of said beamformer by an amount at least as much as said initial inherent delay, whereby said beamformer outputs an enhanced signal to said speech recognition system.

2. The improvement of claim 1, further comprising the step of gradually reducing said delaying of said application of the audio signals to said beamforming part during periods of silence.

3. A beamformer for outputting an enhanced signal to a speech detection system, comprising:
a microphone array for receiving audio signals from a plurality of microphones;
a steering module connected to said microphone array for calculating audio parameters related to the location of a talker, said steering module being subject to an inherent initial delay in calculating said parameters;
a buffer module connected to said microphone array for delaying said audio signals by at least said inherent initial delay; and
a beamforming part connected to said buffer module and said steering module for directing said microphone array toward said talker in response to receiving said audio parameters from said steering part, such that an enhanced signal is output for application to a speech recognition system.

4. The beamformer of claim 3, wherein said steering part comprises a localization algorithm.

5. The beamformer of claim 3, wherein said steering part comprises an adaptation algorithm.

6. The beamformer of claim 3, wherein said buffer module comprises a plurality of parallel FIFO buffers for receiving respective audio signals from individual microphones of said microphone array.

7. The beamformer of claim 6, wherein said FIFO buffers are circular buffers implemented in RAM.

8. The beamformer of claim 3, wherein said buffer module is variable such that the delaying of said audio signals is gradually reduced during periods of silence.
